Europäisches Patentamt

European Patent Office

Office européen des brevets

(11) Publication number: **0 068 682**
**A1**

# EUROPEAN PATENT APPLICATION

(21) Application number: 82302981.4

(22) Date of filing: 09.06.82

(51) Int. Cl.³: **C 08 J 3/12, B 29 B 1/12**

(30) Priority: 22.06.81 US 276200

(71) Applicant: **UNION CARBIDE CORPORATION, Old Ridgebury Road, Danbury Connecticut 06817 (US)**

(43) Date of publication of application: 05.01.83
Bulletin 83/1

(72) Inventor: **Nicholakopoulos, Antonious, 621 Paxson Avenue, Mercerville New Jersey 08619 (US)**
Inventor: **Gill, Grace Margaret, 186 Capricorn Drive, South Somerville New Jersey 08096 (US)**

(74) Representative: **Baverstock, Michael George Douglas et al, BOULT, WADE & TENNANT 27 Furnival Street, London, EC4A 1PQ (GB)**

(84) Designated Contracting States: **BE DE FR GB IT SE**

(54) Continuous process for increasing the uniformity of particulate resins.

(57) This invention provides a continuous process for improving the uniformity of particulate resins. In accordance with the invention, the particle size distribution of the resin is narrowed and the average particle size of the resin is reduced by at least about ten percent by the use of a finishing machine, i.e. a continuous intensive mixer.

EP 0 068 682 A1

CONTINUOUS PROCESS FOR INCREASING THE UNIFORMITY OF
PARTICULATE RESINS

The invention relates generally to particulate resins, and, more particularly to a continuous process for narrowing the particle size distribtuion of particulate resin and one for decreasing the average particle size thereof. The processes employ a finishing machine (i.e., a continuous intensive mixer), resulting in a more uniform product.

Granular resins, as produced in polymerization reaction processes, can be put through a continuous finishing machine (sometimes called a continuous "intensive mixer") for various reasons in a commercial setting. For example, the finishing machine might be used to improve the flowability of the resin particles, to provide a means to incorporate additives onto the resin particles, etc.

The granular resins coming out of a reactor during the production operation generally exhibit a wide particle size distribution, typically one that varies from between about 50 to about 4,000 microns in diameter for the individual resin particles. A common problem associated with resins exhibiting such a wide particle size distribution involves particle segregation of the resin during handling by the manufacturer, distributor, or customer. Such segregation may be produced by gravity loading and discharge of the resin in vessels, conveying of the resin, feeding, blending, or distribution of the resin. For example, in gravity loading of a vessel the segregation effect generally produces a higher concentration of fine particles at the centre of the vessel and a lower concentration of fine particles at the outer walls of the vessel, and *vice versa* for the coarser particles. Since resin properties such as bulk density, flowability, and flow index, tend to vary significantly with particle size, segregation is generally an undesirable phenomenon in an industrial setting.

Heretofore, a common method of avoiding segregation has been to attempt to produce a resin product having uniform particle size coming out of the reactor. Since this is frequently impossible in a commercial operation, it would be desirable to have a method of narrowing the particle size distribution of non-uniform particulate resin to produce a more uniform resin.

The present invention provides a continuous process for narrowing the particle size distribution of particulate resin. The process comprises feeding into a finisher a resin having a particle size distribution wherein the largest particles in the resin are between 25,000 and 600 microns and wherein the smallest particles in the resin are between 500 and 40 microns, and mechanically working the resin in the finisher to produce a finished resin. The finished resin is characterized by a particle size distribution wherein the largest particles in the finished resin are between 15,000 and 500 microns and wherein the smallest particles in the finished resin are between 400 and 30 microns.

In another aspect, the present invention provides a process for decreasing the average particle size of particulate resin by at least about ten percent. This process comprises feeding into a finisher a resin having a particle size distribution wherein the largest particles in the resin are no larger than 25,000 microns and the smallest particles in the resin are no smaller than 40 microns, with the proviso that the largest particles are no smaller than 600 microns and the smallest particles are no larger than 500 microns. The process further comprises mechanically working the resin in the finisher to produce a finished resin, the finished resin being characterized by an average particle size at least about ten percent less than the average particle size of the resin being fed into the finisher.

Also encompassed by the present invention is the product produced in accordance with the above processes. The product is characterized by a tendency not to segregate when subjected to subsequent handling operations such as, for example, during loading, transportation and shipping of the product.

In still another aspect, the present invention relates to a composition obtained utilizing the above processes. This composition consists essentially of particulate low pressure polyethylene resin. When such resin is of low or medium density, an aerated bulk density of at least about 31 (preferably 31, more preferably 33) pounds per cubic foot is achieved. When such resin is of high density, an aerated bulk density of at least about 31 (preferably 35) pounds per cubic foot is achieved.

Typical finishers useful in the process of the present invention are described in U S -A- 3,472,491 and 3,229,002.

As indicated above, the resin useful in the process of this invention is in particulate form (e.g., granules, powder, or pulverized particles). The particle size of the resin is not overly critical and can vary over a wide range within the limits specified above.

The term "resin" as used herein, denotes thermoplastic or thermosetting polymers, preferably aliphatic or aromatic monoolefins in which the backbone chain of the polymer macromolecule is preferably substantially a non-crosslinked hydrocarbon chain with aliphatic or aromatic substituents. The term "resin" thus includes homopolymers of olefins, as well as interpolymers of one or more olefins with each other, and/or up to about 30 weight percent of one or more monomers which are copolymerizable with such olefins. The olefins such as ethylene, propylene, butene-1, isobutylene, pentene-1, 4-methyl-pentene-1, hexene-1, octene-1, nonene-1, decene-1, as well as interpolymers of one or more of such olefins and one or more other monomers which are interpolymerizable with such olefins, such as other vinyl and diene compounds, i.e., those having the group $-C=C-$.

Preferred copolymers are the ethylene copolymers such as ethylene/propylene, copolymers, ethylene/butene-1 copolymers, ethylene/pentene-1 copolymers, ethylene/4-methyl-pentene-1 copolymers, ethylene/hexene-1 copolymers, and ethylene/octene-1 copolymers. Preferred ethylene interpolymers would include two or more of the following: propylene, butene-1, pentene-1, hexene-1, 4-methyl-pentene-1 and octene-1. Preferred propylene interpolymers would include ethylene, butene-1, pentene-1, hexene-1, 4-methyl-pentene-1 and octene-1 as monomers. Preferred butene-1 interpolymers would include ethylene, propylene, hexene-1, 4-methyl-pentene-1 and octene-1 as monomers.

Also included in the term "resin" are blends of one polymer with one or more other polymers. Illustrative of such blends are ethylene polymers with one or more of the following: polypropylene, high pressure, low density polyethylene, high density polyethylene, polybutene-1, and polar monomer containing olefin copolymers such as ethylene/acrylic acid copolymers, ethylene/methyl acrylate copolymer ethylene/ethylacrylate copolymer, ethylene/vinyl acetate copolymer, ethylene/acrylic acid/ethyl acrylate terpolymer, and ethylene/acrylic acid/vinyl acetate terpolymer.

Also included within the term polar monomer containing olefin copolymers are the metallic salts of those olefin copolymers, or blends thereof, which contain free carboxylic acid groups. Illustrative of such polymers are ethylene/acrylic acid copolymer, ethylene/methacrylic acid copolymer, propylene/acrylic acid copolymer, butene/acrylic acid copolymer, and an oxidized olefin polymer.

Illustrative of the metals which can be used to provide the salts of the carboxylic acid polymers are the one, two and three valence metals, such as sodium, lithium, potassium, calcium, magnesium, aluminum, barium, zinc, zirconium, beryllium, iron, nickel, and cobalt.

The preferred olefin polymers for use in the present invention are polymers of ethylene, and the most preferred polymers are those having a melt index of from 0.1 to 10 decigrams per 10 minutes, and a density of from 0.910 to 0.955 gm/cc. Low density ethylene polymer has a density of between 0.910 and 0.925 gm/cc, medium density ethylene polymer has a density of between 0.925 and 0.940 gm/cc, and high density ethylene polymer has a density of between 0.940 and 0.970 gm/cc. Thus, the low density ethylene polymers are the most preferred olefin polymers to be used in the present invention, although the medium and high density polymers also may be used.

Preferred low pressure, low density ethylene copolymers for use in the present invention include those which may be produced in accordance with the procedures set forth in U.S. Patent Application Serial No. 892,325, filed March 31, 1975, and refiled as Serial No. 014,414 on February 27, 1979, in the names of F.J. Karol et al. and entitled "Preparation of Ethylene Copolymers in Fluid Bed Reactor", and the procedures set forth in U.S. Patent Application Serial No. 892,322, filed March 31, 1978, and refiled as Serial No. 012,720 on February 16, 1979, in the names of G.L. Goeke et al. and entitled "Impregnated Polymerization Catalyst, Process for Preparing, and Use for Ethylene Copolymerization" as well as procedures which will produce ethylene hydrocarbon copolymers with properties as heretofore described. U.S. Application Serial No. 014,414 corresponds to European Patent Application No. 79100953.3 which was opened to the public on October 17, 1979 as Publication No. 4645 and U.S. Application Serial No. 012,720 corresponds to European Patent Application No. 79100958.2 which was opened to the public on October 17, 1979 as Publication No. 4647.

Other low pressure, low density ethylene hydrocarbon polymers preferred for use in the present invention are those which may be prepared as described in U.S. -A- 4,011,382, entitled "Preparation of Low and Medium Density Ethylene Polymer in Fluid Bed Reactor" by I.J. Levine et al.

In the process of this invention, when polyethylene is the resin selected, the resin particles enter the finisher at between ambient temperature and 200°F (preferably between 75°F and 180°F), and emerge from the finisher at an elevated temperature below the melt temperature of the resin. When using other resins such as, for example, polypropylene, or polybutylene, the entering temperature range for particles going into the finisher could be adjusted up or down depending upon the melting point of the particular resin used, as would be known to those skilled in the art. The rise in temperature of the resin during the finishing operation is due to the heat generated by mechanical friction caused by contact between and among resin particles, additives (if present) mixing arms and scrapers, and finisher walls. A temperature rise may also be effected by externally applied heat if desired for any purpose, such as to soften the resin particles.

Since most resinous polymers do not have sharp melting points, but instead melt over a wide range of perhaps 5°F to 15°F (3°C-8°C), it is impractical to specify the maximum finishing temperature for all the polymers that can be employed in the present invention. The determination of this temperature should be made for each polymer employed.

Design characteristics of the finishing machine such as, for example, mixing arm density (number of set of arms per inch of shaft), arm speed, arm thickness, and vessel aspect ratio, all influence the specific energy input required to process the resin.

The process of the present invention is suitably effected in a continuous fashion, although a semi-continuous method could be used if desired.

The resin employed in the process of the invention can be added singly to the finisher in continuous fashion, or it can be added together with conventional additives, in either a single or multiple streams. The additives, if employed, are used in minor amounts of less than 50 weight percent, based upon the total composition in the finisher. Typical optional additives which can be liquids or solids would include, for example, pigments, dyes, fillers, stabilizers, lubricants, antistatic agents, and fire retardants, or combinations thereof. Illustratively, such materials can comprise comparatively large particle size solids, for example stabilizers such as ultraviolet stabilizers as 2-hydroxy-4-n octoxybenzophenone having particle sizes in the range of from 75 to 600 micrometers. Such materials also can comprise somewhat smaller size solids, including, for example, pigments such as titanium dioxide, carbon black, ultramarine blue, cadmium orange, zinc oxide, iron oxide and similar materials, of particle in the range from 5 micrometers down to particles having an average diameter less than 1 micrometer, e.g., 0.2 micrometer.    Other suitable solids include magnesium carbonate, calcium carbonate, silicon dioxide, asbestos china clay, lignite, anthracite coal, bituminous coal, silicates, wood dust, cork dust, cellulose and a wide variety of colour agents.  Typical liquid additives would include, for example, peroxides such as hydrogen or cumyl peroxide; butylated hydroxytoluene; or, sterically hindered phenol solutions of tertiary amines or phosphenes.

As used herein, the terms "aerated bulk density" denotes that density measured in accordance with ASTM standard D-1895-67-B.

The following examples are intended to illustrate, but in no way limit, the present invention.

## Example 1

Into a finishing machine, a Wedco
#14/21 machine, having the following design characteristics:

> 4 mixing arm sets (2 arms per set).
>
> 0.75 inch diameter arm
>
> 14 inch diameter by 21 inch length
> mixing chamber
>
> 2 scraper sets (2 scrapers per set)

and operated at 1000 rpm shaft speed was continuously fed granular polyethylene resin particles having an average particle size of 0.0469 inches (resin melt index = 1.800; resin density = 0.918). The inlet temperature of the resin into the finisher was ambient temperature (about 65°F) whereas the outlet temperature was about 210°F.

After finishing via the above procedure, the resin was subjected to standard sieve analysis following ASTM E-11-61 using a RO-TAP sifter for 10 minutes on 100 grams samples of resin to determine the particle size distribution for the processed resin. As a comparison, the particle size distribution of identical unfinished resin without any finishing was determined by sieve analysis. The results, expressed in terms of weight percent resin retained in various sized mesh screen, is given in Table I which follows:

The results, as given in Table I, show the finished resin to have a substantially narrower particle size distribution as compared to the unfinished resin.

## TABLE I

### RESIN PARTICLE SIZE DISTRIBUTION

| Mesh Size | Wt. % Resin Retained in Mesh or Foam | |
|---|---|---|
| | Unfinished Resin | Finished Resin |
| 5 | 0.2 | - |
| 6 | 1.1 | - |
| 8 | 6.4 | 0.5 |
| 12 | 15.3 | 4.2 |
| 20 | 32.2 | 31.0 |
| 30 | 13.7 | 16.8 |
| 40 | 11.4 | 16.6 |
| 60 | 14.5 | 17.5 |
| 100 | 4.0 | 8.2 |
| 200 | 1.1 | 3.2 |
| Pan | 0.1 | - |

-13-

## Example 2

Granular polyethylene resin having physical properties as given in Table II below was finished in accordance with the technique described in Example 1 above. The finished resin was compared to identical unfinished resin with respect to average particle size in inches. The results, in terms of particle size and percent decrease in average particle size from finishing, are presented in Table II which follows:

### TABLE II

#### Resin Average Particle Size (in inches)

| Resin | Unfinished Resin | Finished Resin | % Decrease in Average Particle Size During Finishing |
|---|---|---|---|
| #1 (MI:1.8, $\rho$: .918) | 0.0469 | 0.0278 | 41 |
| #2 (MI:3.0, $\rho$: .920) | 0.0394 | 0.0230 | 42 |
| #3 (MI:1.9, $\rho$: .918) | 0.0278 | 0.0190 | 32 |
| #4 (MI:2.0, $\rho$: .920) | 0.0469 | 0.0197 | 58 |

## Example 3

Resin #1 from Table II above was subjected to a gravity segregation test whereby a gravity formed conical pile of unfinished resin and one of finished resin were made and samples from each were taken at the top center of the pile (Point "A") and at the bottom perimeter of the pile (Point "B"). The gravity segregation test was conducted by loading the resin into a funnel having a 3/4 inch discharge opening that was located 36 inches above a horizontal platform. After loading, the resin discharged onto the platform forming a cone of resin 36 inches wide at the bottom and 18 inches high at the center apex.

The results in terms of particle size distribution from a mesh screen analysis at points "A" and "B" together with computations for the resulting coefficients of variations (COV) are given in Table III which follows.

Additional results in terms of an aerated bulk density measurement at points "A" and "B" are given in Table IV which follows.

The results as presented in Table IV clearly illustrate the effect of segregation on bulk density. For the unprocessed resin, the bulk density varied by 31% between points A and B, whereas for the processed resin such variation was reduced to 0.6%.

## TABLE III
### GRAVITY SEGREGATION TEST

| Mesh Size | Particle Size Distribution and Coefficient of Variation for Unfinished Resin | | | Particle Size Distribution and Coefficient of Variation for Finished Resin | | |
|---|---|---|---|---|---|---|
| | % Retained | | COV | % Retained | | COV |
| | A | B | | A | B | |
| 5 | 0.20 | 0.30 | 28.3 | 0.60 | 0.10 | 101.0 |
| 6 | 0.60 | 1.40 | 56.6 | 0.10 | 0.10 | 0.0 |
| 8 | 3.48 | 11.90 | 77.4 | 0.50 | 0.70 | 23.6 |
| 12 | 9.36 | 32.30 | 77.9 | 2.16 | 3.30 | 29.5 |
| 20 | 30.70 | 47.20 | 30.0 | 23.20 | 29.70 | 17.4 |
| 30 | 12.9 | 4.10 | 73.2 | 16.30 | 17.66 | 5.7 |
| 40 | 15.68 | 1.50 | 116.7 | 21.41 | 20.12 | 4.4 |
| 60 | 10.31 | 0.52 | 128.0 | 18.79 | 18.10 | 2.7 |
| 100 | 19.49 | 1.00 | .127.6 | 18.45 | 12.32 | 28.2 |
| 200 | 1 06 | 0.40 | 58.7 | 2.55 | 1.68 | 29.0 |
| PAN | 0.00 | 0.00 | 0.0 | 0.00 | 0.00 | 0.0 |
| | AVERAGE COV | | 77.40% | AVERAGE COV | | 24.2% |

-16-

## TABLE IV

## AERATED BULK DENSITY (LB/FT.$^3$)

| Sampling Pt. | Unprocessed | Processed |
|---|---|---|
| A | 26.9 | 29.64 |
| B | 20.5 | 29.40 |

$$\Delta = 31\% \qquad \Delta = 0.6\%$$

## Example 4

Low pressure, low density granular polyethylene resin having a melt index of 2.0 and a density of 0.92 was finished in accordance with the teachings described in Example 1 above. The aerated bulk density of the finished resin measured using ASTM D-1890-67-B was 31.3

Another low pressure, low density resin having a melt index of 20 and a density of 0 924, finished in accordance with Example 1 except that the outlet temperature was 190°F, provided a bulk density of 33.0 using the ASTM standard referenced above.

## Example 5

Low pressure, high density granular polyethylene resin having a melt index of 40 and a density of 0.955 was finished in accordance with the teachings described in Example 1 above. The finisher was identical to that in Example 1 except that the arm diameter was 1 inch, the shaft speed was 650 rpm and the Wedco machine used was a Wedco No. 20/30 machine. The aerated bulk density of the finished resin measured using ASTM D-1890-67-B was 31.

Under the same conditions but employing resin having a melt index of 6.2 and a density of 0.957 the measured aerated bulk density was 35.3.

CLAIMS:

1. A continuous process for narrowing the particle size distribution of particulate resin which comprises feeding into a finisher a resin having a particle size distribution wherein the largest particles in the resin are between 25,000 and 600 microns and wherein the smallest particles in the resin are between 500 and 40 microns, and mechanically working the resin in the finisher to produce a finished resin, the finished resin having a particle size distribution wherein the largest particles in the finished resin are between 15,000 and 500 microns and wherein the smallest particles in the finished resin are between 400 and 30 microns.

2. A continuous process for decreasing the average particle size of particulate resin by at least about 10 percent which comprises feeding into a finisher a resin having a particle size distribution wherein the largest particles in the resin are no larger than 25,000 microns and the smallest particles in the resin are no smaller than 40 microns, with the proviso that the largest particles are no smaller than 600 microns and the smallest particles are no larger than 500 microns, and mechanically working the resin

0068682

in the finisher to produce a finished resin, the finished resin being characterized by an average particle size at least about 10 percent less than the average particle size of the resin being fed into the finisher.

3. A composition consisting essentially of low, medium or high density, or mixtures thereof, particulate low pressure polyethylene resin having an aerated bulk density of at least about 31 lbs. per cubic foot.

4. A composition as claimed in claim 3 wherein the bulk density is at least about 33 lbs. per cubic foot.

5. A composition as claimed in claim 3 wherein the resin is of high density and wherein the bulk density is at least about 35 lbs. per cubic foot.

MGB/SJW/DR/EA622

| Category | Citation of document with indication, where appropriate, of relevant passages | Relevant to claim | CLASSIFICATION OF THE APPLICATION (Int. Cl. 3) |
|---|---|---|---|
| A | US - A - 3 372 880 (O'HARA)<br>+ Totality +<br>-- | 1,2 | C 08 J 3/12<br>B 29 B 1/12 |
| A | GB - A - 740 054 (MONTECATINI)<br>+ Totality +<br>-- | 1,2 | |
| A | US - A - 3 634 385 (WALLES et al.)<br>+ Claims; column 4, lines 35-47 +<br>-- | 1,2 | |
| D,A | US - A - 3 229 002 (FEDER)<br>+ Totality +<br>---- | 1 | **TECHNICAL FIELDS SEARCHED (Int.Cl. 3)**<br><br>C 08 J<br>B 29 B |

## DOCUMENTS CONSIDERED TO BE RELEVANT

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons
&: member of the same patent family, corresponding document

The present search report has been drawn up for all claims

| Place of search | Date of completion of the search | Examiner |
|---|---|---|
| VIENNA | 10-09-1982 | WEIGERSTORFER |